# EUROPEAN PATENT SPECIFICATION

(11) **EP 1 672 856 B1**
(45) Date of publication and mention of the grant of the patent: **20.01.2010**
(21) Application number: 05111555.8
(22) Date of filing: 01.12.2005
(51) Int. Cl.: H04L 12/58, H04L 29/08

(54) **Method and system for providing notification when a user becomes available for communicating**
Verfahren und Vorrichtung zur Bekanntmachung der Kommunikationsbereitschaft eines Benutzers
Procédé et système pour notifier quand un utilisateur devient disponible pour communiquer

(30) Priority: 20.12.2004 US 18558
(43) Date of publication of application: 21.06.2006
(73) Proprietor: Microsoft Corporation, Redmond, WA 98052 (US)
(72) Inventor: Raghav, Amritansh, Redmond, Washington 98052 (US); Shtiegman, Eran, Redmond, Washington 98052 (US); Cadiz, Jonathan J., Redmond, Washington 98052 (US); Venky, Setty, Bellevue, Washington 98007 (US); Rao, Sira, Redmond, Washington 98052 (US)
(74) Representative: Grünecker, Kinkeldey, Stockmair & Schwanhäusser Anwaltssozietät

(56) References cited:
- US-A1- 2004 059 781

## Description

### TECHNICAL FIELD

The described technology relates generally to providing notifications of changes to presence information.

### BACKGROUND

Real-time conversations between conversation participants via their computer systems are becoming increasingly common. Such real-time conversation requires that the participants be present at their computer systems (e.g., personal digital assistants) and able to respond when a communication is received. A common form of real-time conversation is provided by instant messaging services. An instant messaging service allows participants to send messages and have them received within a second or two by the other participants in the conversation. The receiving participants can then send responsive messages to the other participants in a similar manner. To be effective, a real-time conversation relies on the participants' becoming aware of, reviewing, and responding to received messages very quickly. This quick response is in contrast to conventional electronic mail systems in which the recipients of electronic mail messages respond to messages at their convenience.

When an initiating participant wants to start a real-time conversation, that participant needs to know whether the intended participants are available to respond in real time to a message. If not, then communications via conventional electronic mail, voice mail, or some other mechanism may be more appropriate. For example, if the computers of the intended participants are currently powered off, then a real-time conversation may not be possible. Moreover, if their computers are currently powered on, but the intended participants are away from their computers, a real-time conversation is also not possible. The initiating participant would like to know the availability of the intended participants so that an appropriate decision on the form of communication can be made.

The availability status of an entity such as a computer system or a user associated with that computer system is referred to as "presence information." Presence information identifies the current "presence state" of the user. Users make their presence information available so that other users can decide how best to communicate with them. For example, the presence information may indicate whether a user is logged on ("online") with an instant messaging server or is logged off ("offline"). Presence information may also provide more detailed information about the availability of the user. For example, even though a user is online, that user may be away from their computer in a meeting. In such a case, the presence state may indicate "online" and "in a meeting."

In an instant messaging context, a publishing user ("publisher") may provide their presence information to a presence server that then provides the presence information to subscribing users ("subscribers"). Thus, a presence server may use a subscriber/publisher model to provide the presence information for the users of the presence service. Whenever the presence information of a user changes, the presence server is notified of the change by that user's computer system and in turn notifies the subscribing users of the change. A subscribing user can then decide whether to initiate an instant messaging conversation based on the presence information of the intended participants. For example, if the presence information indicates that a publishing user is currently in a conference telephone call, then the subscribing user may decide to send an instant message, rather than place a telephone call, to the publishing user. If the subscribing user, however, needs to call and speak with the publishing user, the subscribing user needs to monitor the presence information of the publishing user to know when the call can be placed. When the subscribing user notices that the publishing user's presence information indicates that the telephone conference has been concluded, then the subscribing user can then place the telephone call.

It can, however, be difficult for a user to actually become aware that a particular user, also referred to as a "contact," has become available to process a certain type of communication. The user may need to check each change in presence information of each contact. The difficulty is increased when the user subscribes to the presence information of many contacts. For example, a member of a large design team (e.g., with 100+ members) may subscribe to the presence information of all the other members so that the subscribing member will know when and how best to communicate with the other members. At any given time, the member may be currently interested in communicating, however, only with a small group of other members and wants to be notified when those members of interest become available for communicating. Because the member subscribes to the presence information from all the other members, the member is notified whenever any member's presence information changes. Thus, the member needs to monitor all those notifications to see whether any of them relate to a member of interest. It would be disruptive for the member to have to check their computer every time a notification is received to see if it relates to a member of interest.

US 2004/0059781 by J. H. Yoakum et al. discloses a presence system capable of efficiently controlling the delivery of presence information for select individuals to a subscriber.

It would be desirable to have a mechanism that would allow a subscribing user to recognize when a publishing contact who is currently of interest becomes available for communicating without having to monitor the presence information of all subscribed-to contacts.

### SUMMARY

The present invention provides a computer-based method according to claim 1, a computer readable medium according to claim 9 and a system according to claim 14. Preferred embodiments are disclosed in the dependent claims.

### BRIEF DESCRIPTION OF THE DRAWINGS

Figure 1 is a diagram illustrating a presence model of presence states in one embodiment.

Figure 2 illustrates a dialog box for selecting whether to be notified of changes in presence state for all contacts or for only those contacts of interest in one embodiment.

Figure 3 illustrates a dialog box for specifying the contacts of current interest in one embodiment.

Figure 4 illustrates a dialog box for notifying a user that a contact of interest has entered a presence state that is of interest to the user in one embodiment.

Figure 5 is a block diagram illustrating components of the notification system in one embodiment.

Figure 6 is a flow diagram illustrating the processing of the receive presence information component in one embodiment.

### DETAILED DESCRIPTION

A method and system for providing notifications of changes in the presence state of contacts is provided. In one embodiment, a notification system allows a user to specify those contacts of interest for whom the user wants to be notified when the contact becomes available for communicating (or more generally enters a certain presence state). A user may subscribe to the presence information of many contacts, but may only currently be interested in a change in a presence state of certain specified contacts. For example, a user may want to place a telephone call to a certain contact, but the contact's presence information may indicate that the contact is currently in a meeting. The user would like to be notified when that contact becomes available to answer a telephone call. When presence information is received about a contact, the notification system determines whether the contact is a contact of interest as specified by the user. If so, then the notification system determines whether the presence information indicates a change in presence state such that the contact is now available to communicate with the user. If the contact is available to communicate, the notification system notifies the user, for example, by displaying a dialog box indicating that the contact is now available to communicate. The dialog box may also identify various options for communicating with the contact. For example, the dialog box may include a button for creating and sending an instant message to the contact or for placing a telephone call to the contact. If the contact or the change in presence state is not of interest (e.g., the contact is still not available to communicate), then the notification system does not notify the user. If a user is no longer interested in being notified when a certain contact becomes available to communicate, then the user can indicate that the user has no further interest in being notified when the contact becomes available. In this way, rather than being notified of all changes in presence state for all contacts, a user can selectively indicate those contacts of interest for whom the user wants to receive notifications. The user is thus provided with notifications for only those contacts that are of current interest.

In one embodiment, the notification system may notify the user whenever a contact of interest becomes available to communicate with the user. Each presence state may have an associated attribute that indicates whether the contact in that presence state is available to communicate. For example, the presence state of "on the phone" may have its attribute set to indicate that the contact is not available to communicate, whereas the presence state of "working on the computer" may have its attribute set to indicate that the contact is available to communicate. The notification system may also include attributes to indicate the method of communication that may be available in each presence state. For example, the presence state of "in a meeting" may have its attribute set to indicate that the contact is available to receive an instant message (e.g., via a personal digital assistant), but not available to receive a telephone call. The notification system may also allow a contact to specify these attributes. For example, one contact may specify unavailability to communicate when their presence state is "in a meeting," whereas another contact may specify availability to receive an instant message. The notification system notifies the user of the availability of a contact to communicate and may provide with the notification an indication of the methods of communication that the contact is available to receive. For example, if a contact is only available to receive an instant message, then the notification may include an option to send an instant message, but not an option to place a telephone call.

In one embodiment, the notification system may allow a user to identify those presence states for which the user wants to receive notifications when a contact enters those states. For example, a user may want to be notified when a contact's presence state changes to "in a meeting," irrespective of the availability of the contact to communicate. The notification system may allow a user to identify those presence states globally for all contacts or on a contact-by-contact basis.

In one embodiment, the notification system may allow a user to select the method of notification that the notification system uses. For example, one user may want to be notified via a pop-up dialog box, whereas another user may want to be notified by a call to the user's cell phone. The notification system may allow a user to set the method of notification based on the current presence state of the user. For example, the user may select to receive notifications only via their cell phone when their presence state is "in the car." Alternatively, the notification system may automatically identify the best method of notification based on the user's current presence state. For example, if the presence state of the user is "in the car," then the notification system may automatically decide to notify the user via their cell phone, rather than a pop-up dialog box. Alternatively, the notification system can notify the contact that a user is waiting to start a conversation. The notification system may give the contact the option of selecting the mode of communication or not allowing the conversation.

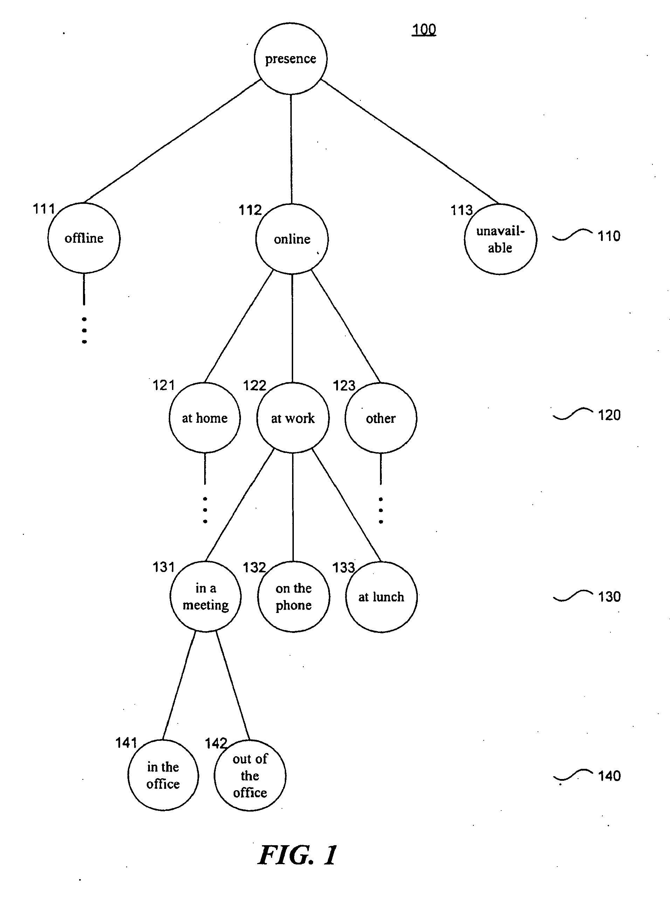

Figure 1 is a diagram illustrating a presence model of presence states in one embodiment. The presence model 100 defines a hierarchy of presence states of a publishing entity, such as a user, client or computer system. The first-level presence states 110 are "offline" 111, "online" 112, and "unavailable" 113. "Offline" indicates that the publishing entity is not currently available, "online" indicates that the publishing entity is currently logged on to the presence server, and "unavailable" indicates that no presence information is currently available. The second-level presence states 120 of the "online" presence state are "at home" 121, "at work" 122, and "other" 123. "At home" indicates that the publishing entity is online at home, "at work" indicates that the publishing entity is online at work, and "other" indicates that the publishing entity is online at some other location. The third-level presence states 130 of the "at work" presence state are "in a meeting" 131, "on the phone" 132, and "at lunch" 133, which are self-descriptive. The fourth-level presence states 140 of the "in a meeting" presence state are "in the office" 141 and "out of the office" 142, which are also self-descriptive. A user may be allowed to define the hierarchy of presence states of a presence model and to define multiple presence models. The notification system may allow contacts to define in which presence states they are available to communicate and the method or methods of communication that are allowed or desirable in each presence state. The notification system may also allow a user to select for which presence states of contacts the user wants to be notified.

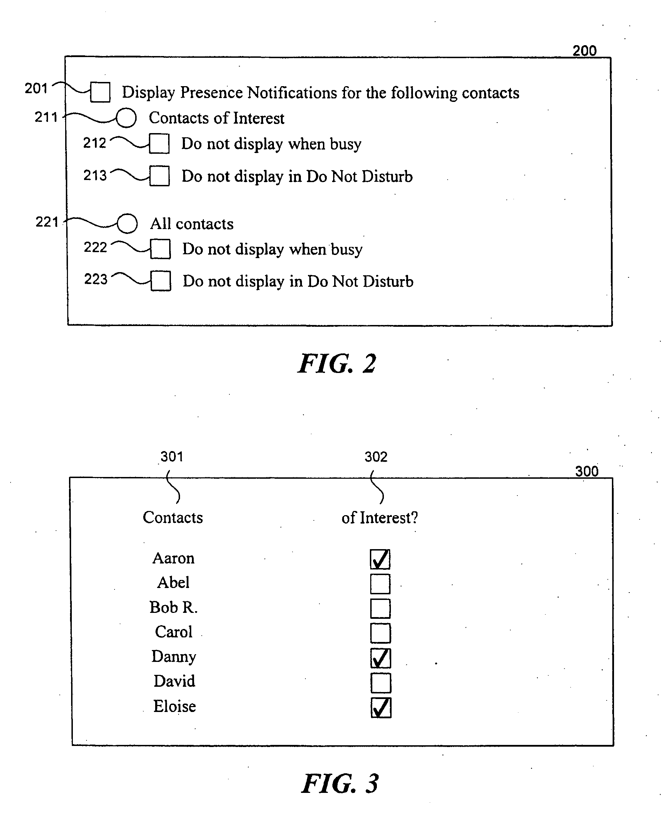

Figure 2 illustrates a dialog box for selecting whether to be notified of changes in presence state for all contacts or for only those contacts of interest in one embodiment. In this example, a user can define one group of contacts of interest. One skilled in the art will appreciate that the notification system may allow a user to define multiple groups of contacts of interest and selectively enable the user to receive notification for one or more groups at a time. The dialog box 200 includes a checkbox 201 for the user to select whether to be notified of changes in a presence state. If the user selects to be notified, then the user may select radio buttons 211 or 221. If the user selects radio button 211, then the user will receive notifications for only those contacts of interest. If the user selects radio button 221, then the user will receive notifications for all contacts. If the user selects checkbox 212 or 222, then the notifications will not be provided when the presence state of the user indicates that the user is currently busy. If the user selects checkbox 213 or 223, then the notifications will not be provided when the user has indicated to not be disturbed.

Figure 3 illustrates a dialog box for specifying the contacts of current interest in one embodiment. The dialog box 300 includes a list 301 of contacts to which the user is currently subscribed to their presence information. The dialog box also includes checkboxes 302 for allowing the user to specify the contacts of interest. In this example, the user has indicated to be notified of a change in presence state or availability of Aaron, Danny, and Eloise. One skilled in the art will appreciate that many different user interfaces can be used for specifying contacts of interest. For example, each contact may have a properties dialog box through which the user can indicate that the contact is of current interest. The notification system may also include a dialog box that allows a user to select the presence states for which the user wants to be notified when a contact enters that presence state. That dialog box may display the presence states in hierarchical form, such as shown in Figure 1, and allow the user to select the presence states that are of interest. The notification system may also allow a user to specify a group of contacts and to be notified when any contact in the group becomes available.

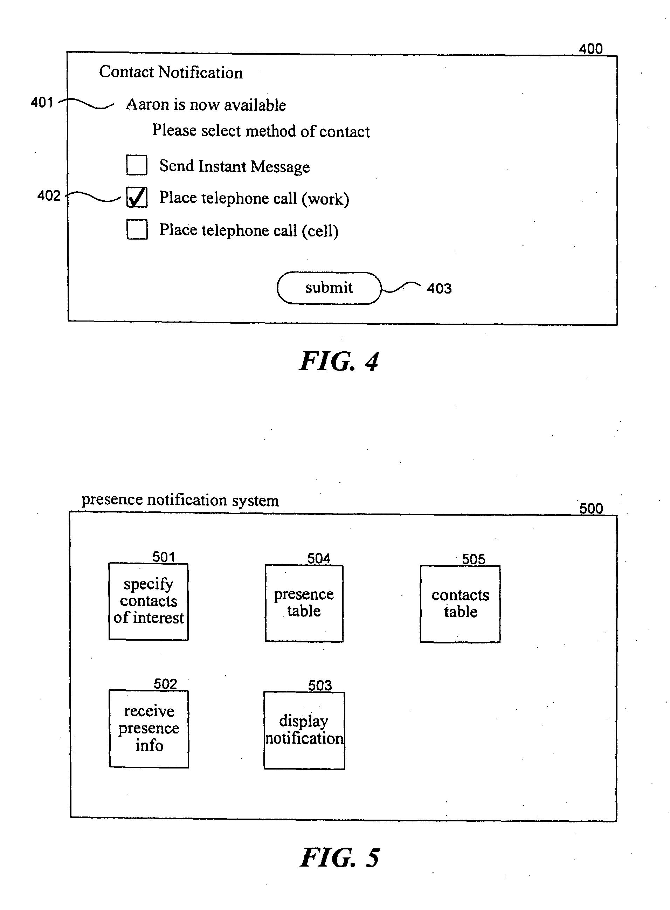

Figure 4 illustrates a dialog box for notifying a user that a contact of interest has entered a presence state that is of interest to the user in one embodiment. In this example, the notification is provided whenever the specified contact becomes available to communicate. The dialog box 400 includes a contact identification area 401, method of communication options 402, and a submit button 403. When the dialog box pops up, the user is notified that Aaron is available to communicate. The user can then select a method of communication and then select the submit button to initiate communicating with the contact via the selected method of communication. One skilled in the art will appreciate that the notification system could use various forms of communication to notify the user. For example, the notification system could notify the user by placing a telephone call with a message indicating the contact's availability. If the contact is available to communicate via telephone, then the message may give the user the option to place the call by, for example, pressing a button or speaking a certain phrase. The notification system may also provide a notification that is appropriate to the user's own availability. For example, if the user is away from their computer, then the notification system may notify the user by placing a telephone call to the user. The notification system may consider the presence state of the user in deciding whether to notify the user of a contact's availability. For example, if a contact is available to receive only an instant message, but the user is only available via telephone, then the notification system may not send the notification because there is no common method of communication available to the user and the contact.

Figure 5 is a block diagram illustrating components of the notification system in one embodiment. The notification system 500 includes a specify contacts of interest component 501, a receive presence information component 502, and a display notification component 503. The notification system also includes a presence table 504 and a contacts table 505. The presence table contains an entry for each subscribed-to contact that indicates the current presence state of that contact. Whenever the presence system receives a notification of change in presence state of a subscribed-to contact, it updates the entry in the presence table for that contact. The entries in the presence table may also indicate whether the contact is of current interest to the user. The contacts table 505 contains an entry for each contact. The entries in the contacts table may identify the presence states of that contact for which the user wants to receive notifications. The entries may also identify the methods of communication that are appropriate for that presence state. The specify contacts of interest component provides the user interface, such as that of Figure 3, through which a user can specify the contacts of interest. The receive presence information component receives presence information about the subscribed-to contacts, updates the presence table, and notifies the user if the contact and presence state are of interest to the user. The display notification component creates a notification, such as that of Figure 4, and displays it to the user.

The computing device on which the notification system is implemented may include a central processing unit, memory, input devices (e.g., keyboard and pointing devices), output devices (e.g., display devices), and storage devices (e.g., disk drives). The memory and storage devices are computer-readable media that may contain instructions that implement the notification system. In addition, the data structures and message structures may be stored or transmitted via a data transmission medium, such as a signal on a communication link. Various communication links may be used, such as the Internet, a local area network, a wide area network, a point-to-point dial-up connection, a cell phone network, and so on.

Embodiments of the notification system may be implemented in various operating environments that include personal computers, server computers, hand-held or laptop devices, multiprocessor systems, microprocessor-based systems, programmable consumer electronics, digital cameras, network PCs, minicomputers, mainframe computers, distributed computing environments that include any of the above systems or devices, and so on. The computer systems may be cell phones, personal digital assistants, smart phones, personal computers, programmable consumer electronics, digital cameras, and so on.

The notification system may be described in the general context of computer-executable instructions, such as program modules, executed by one or more computers or other devices. Generally, program modules include routines, programs, objects, components, data structures, and so on that perform particular tasks or implement particular abstract data types. Typically, the functionality of the program modules may be combined or distributed as desired in various embodiments.

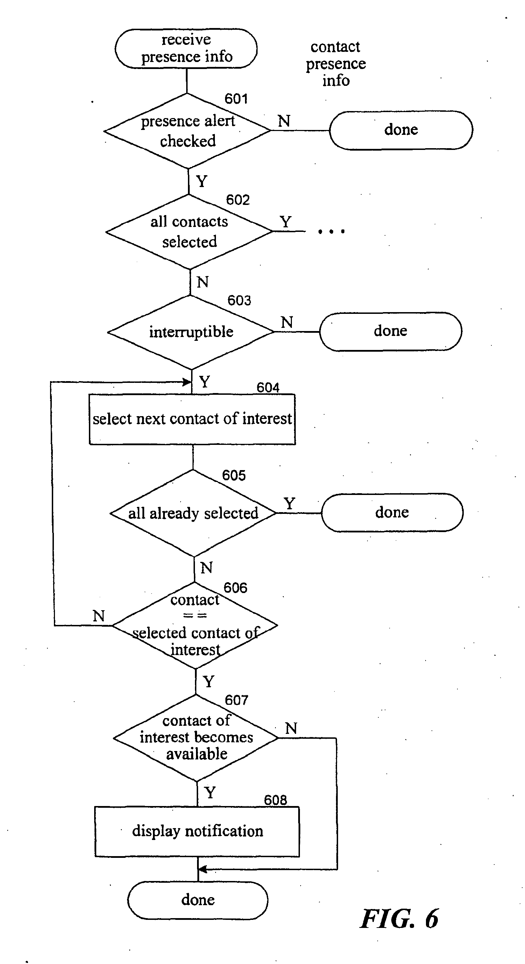

Figure 6 is a flow diagram illustrating the processing of the receive presence information component in one embodiment. The component is passed an indication of a contact and their current presence state. In decision block 601, if the user specified to receive presence notifications, then the component continues at block 602, else the component completes. In decision block 602, if the user specified to receive notifications from all contacts, then the component continues at block 607, else the component continues at block 603. In decision block 603, if the user is interruptible, then the component continues at block 604, else the component completes. The user is not interruptible when, for example, the user has indicated not to receive notifications if the user is busy or not to be disturbed, and the user is currently busy or is not to be disturbed. In block 604-606, the component loops determining whether the passed contact is a contact of interest. In block 604, the component selects the next contact of interest. In decision block 605, if all the contacts of interest have already been selected, then the component completes, else the component continues at block 606. In decision block 606, if the passed contact is the same as the selected contact, then the passed contact is a contact of interest and the component continues at block 607, else the component loops to block 604 to select the next contact of interest. In decision block 607, if the contact of interest has become available as indicated by the passed presence state, then the component continues at block 608, else the component completes. In block 608, the component displays the notification to the user and then completes.

From the foregoing, it will be appreciated that specific embodiments of the notification system have been described herein for purposes of illustration, but that various modifications may be made without deviating from the scope of the invention. One skilled in the art will appreciate that the notification system may be used by a user who wants to have a face-to-face conversation with a contact. For example, when the user is notified that the contact is available, the user could walk to the contact's office to have the conversation. One skilled in the art will appreciate that a "telephone call," as used in this description, encompasses various types of voice conversations (e.g., voice over IP and voice over traditional telephone systems). The notification system can also be used to notify a user when a contact becomes available for many different types of conversations. For example, a user may request to be notified when a contact becomes available for application sharing or video conferencing. The contact may be available for a telephone call or an instant message conversation but may not be available for application sharing, because their personal digital assistant does not support application sharing. In such a case, the user does not want to be notified of the contact's availability until the contact can share an application. One skilled in the art will appreciate that a contact could be a device such as a printer, copy machine, conference room, and so on. Accordingly, the invention is not limited except as by the appended claims.

## Claims

1. A computer-based method for providing presence information of contacts, the method comprising:
receiving an indication from a user subscribing to presence information of the contacts;
receiving an indication from the user specifying contacts of interest from whom the user wants to be notified when a contact enters a certain presence state;
receiving presence information about a contact;
determining whether the contact is a contact of interest as specified by the user;
and if so determining whether the presence state of the contact of interest indicates a certain change, and
if so, notifying the user of the change in presence state of the contact of interest; and
if the contact or the change in presence state is not of interest suppressing the notifying of the user,
receiving an indication from the user selecting a method for notifying the user of the change in presence state of the contact of interest, to be used based on a current presence state of the user.

2. The method of claim 1 wherein the notifying includes methods of communication with the contact.

3. The method of claim 2 wherein a method of communication includes an instant message.

4. The method of claim 2 wherein a method of communication includes a telephone call.

5. The method of claim 1 including allowing the user to define the certain change in presence state.

6. The method of claim 1 wherein the certain change is a change to available to communicate with the user.

7. The method of claim 1 implemented on a telephone.

8. The method of claim 1 implemented on a computer system.

9. A computer-readable medium containing instructions for controlling a computer system to provide presence information of contacts, by a method comprising:
receiving an indication from a user specifying those contacts of interest for whom the user wants to be notified when a contact enters a certain presence state;
receiving an indication from the user subscribing to presence information of many contacts;
receiving a presence state of a contact;
determining whether the contact is a contact of interest as specified by the user;
determining whether the received presence state is of user-specified interest; and
when it is determined that the contact is of interest and the presence state is of user-specified interest, notifying the user of the received presence state; and ,
when it is determined that the contact or the change in presence state is not of interest, not notifying the user;
receiving an indication from the user selecting a method for notifying the user of the received presence state of the contact of interest to be used based on a current presence state of the user.

10. The computer-readable medium of claim 9 wherein the notifying is provided by a method of communication that is available to the user.

11. The computer-readable medium of claim 9 wherein a contact can specify a presence state in which the contact is available to communicate.

12. The computer-readable medium of claim 9 wherein the notifying includes methods of communication with the contact.

13. The computer-readable medium of claim 9 wherein notification is provided when the contact becomes available to communicate with a user.

14. A system for notifying a user when a contact becomes available to communicate, comprising:
means for specifying by the user contacts of interest from whom the user wants to be notified when a contact becomes available for communicating; and
means for subscribing to presence information of many contacts;
means for receiving presence information about a contact,
wherein the system determines, when the presence information about a contact is received, whether the contact is a contact of interest as specified by the user, and
if the contact is a contact of interest as specified by the user, determining whether the presence information indicates a change in presence state such that the contact is now available to communicate with the user and if the contact and the change in presence state are of interest to the user, notifying the user, the notification indicating methods of communication with the contact, and
if the contact or change in presence state is not of interest, not notifying the user;
means for selecting by the user a method for notifying the user of the change in presence state of the contact of interest, which method the system for notifying is adapted to use based on a current presence state of the user.

15. The system of claim 14 wherein a method of communication is an instant message.

16. The system of claim 14 wherein a method of communication is a telephone call.

17. The system of claim 14 including means for allowing a contact to define availability.

18. The system of claim 14 wherein availability is indicated by presence state.

## Patentansprüche

1. Computerbasiertes Verfahren zum Bereitstellen von Anwesenheitsinformationen von Kontakten, wobei das Verfahren umfasst:
Empfangen einer Anzeige von einem Benutzer, der an dem Bereitstellen von Anwesenheitsinformationen der Kontakte teilnimmt;
Empfangen einer Anzeige von dem Benutzer, die Kontakte von Interesse angibt, von denen der Benutzer benachrichtigt werden möchte, wenn ein Kontakt in einen bestimmten Anwesenheitsstatus eintritt;
Empfangen von Anwesenheitsinformationen über einen Kontakt;
Feststellen, ob der Kontakt ein von dem Benutzer angegebener Kontakt von Interesse ist;
wenn dies der Fall ist, Feststellen, ob der Anwesenheitsstatus des Kontaktes von Interesse eine bestimmte Veränderung anzeigt, und
wenn dies der Fall ist, Benachrichtigen des Benutzers über die Veränderung des Anwesenheitsstatus des Kontaktes von Interesse; und
wenn der Kontakt oder die Veränderung des Anwesenheitsstatus nicht von Interesse ist, Verhindern, dass der Benutzer benachrichtigt wird.
Empfangen einer Anzeige von dem Benutzer, mit der ein zu verwendendes Verfahren zum Benachrichtigen des Benutzers über die Veränderung des Anwesenheitsstatus des Kontaktes von Interesse auf Basis eines aktuellen Anwesenheitsstatus des Benutzers ausgewählt wird.

2. Verfahren nach Anspruch 1, wobei das Benachrichtigen Verfahren der Kommunikation mit dem Kontakt einschließt.

3. Verfahren nach Anspruch 2, wobei ein Verfahren der Kommunikation eine Sofortmitteilung (instant message) einschließt.

4. Verfahren nach Anspruch 2, wobei ein Verfahren der Kommunikation einen Telefonanruf einschließt.

5. Verfahren nach Anspruch 1, das einschließt, dass es dem Benutzer gestattet wird, die bestimmte Veränderung des Anwesenheitsstatus zu definieren.

6. Verfahren nach Anspruch 1, wobei die bestimmte Veränderung eine Veränderung zur Verfügbarkeit zum Kommunizieren mit dem Benutzer hin ist.

7. Verfahren nach Anspruch 1, das in einem Telefon implementiert ist.

8. Verfahren nach Anspruch 1, das in einem Computersystem implementiert ist.

9. Computerlesbares Medium, das Befehle enthält, mit denen ein Computersystem so gesteuert wird, dass es Anwesenheitsinformationen von Kontakten mittels eines Verfahrens bereitstellt, das umfasst:
Empfangen einer Anzeige von einem Benutzer, die diejenigen Kontakte von Interesse angibt, für die der Benutzer benachrichtigt werden möchte, wenn ein Kontakt in einen bestimmten Anwesenheitsstatus eintritt;
Empfangen einer Anzeige von dem Benutzer, der am Bereitstellen von Anwesenheitsinformationen vieler Kontakte teilnimmt;
Empfangen eines Anwesenheitsstatus eines Kontaktes;
Feststellen, ob der Kontakt ein von dem Benutzer angegebener Kontakt von Interesse ist;
Feststellen, ob der empfangene Anwesenheitsstatus gemäß Benutzerangabe von Interesse ist; und
wenn festgestellt wird, dass der Kontakt von Interesse ist und der Anwesenheitsstatus gemäß Benutzerangabe von Interesse ist, Benachrichtigen des Benutzers über den empfangenen Anwesenheitsstatus; und
wenn festgestellt wird, dass der Kontakt oder die Veränderung des Anwesenheitsstatus nicht von Interesse ist, Unterlassung von Benachrichtigung des Benutzers;
Empfangen einer Anzeige von dem Benutzer, mit der ein zu verwendendes Verfahren zum Benachrichtigen des Benutzers über den empfangenen Anwesenheitsstatus des Kontaktes von Interesse auf Basis eines aktuellen Anwesenheitsstatus des Benutzers ausgewählt wird.

10. Computerlesbares Medium nach Anspruch 9, wobei das Benachrichtigen mittels eines Verfahrens der Kommunikation erfolgt, das dem Benutzer zur Verfügung steht.

11. Computerlesbares Medium nach Anspruch 9, wobei ein Kontakt einen Anwesenheitsstatus angeben kann, in dem der Kontakt zum Kommunizieren verfügbar ist.

12. Computerlesbares Medium nach Anspruch 9, wobei das Benachrichtigen Verfahren der Kommunikation mit dem Kontakt einschließt.

13. Computerlesbares Medium nach Anspruch 9, wobei Benachrichtigung erfolgt, wenn der Kontakt zum Kommunizieren mit einem Benutzer verfügbar ist.

14. System, mit dem ein Benutzer benachrichtigt wird, wenn ein Kontakt zum Kommunizieren verfügbar wird, wobei es umfasst:
eine Einrichtung, mit der von dem Benutzer Kontakte von Interesse angegeben werden, von denen der Benutzer benachrichtigt werden möchte, wenn ein Kontakt zum Kommunizieren verfügbar wird; und
eine Einrichtung zum Teilnehmen am Bereitstellen von Anwesenheitsinformationen vieler Kontakte;
eine Einrichtung zum Empfangen von Anwesenheitsinformationen über einen Kontakt,
wobei das System, wenn die Anwesenheitsinformationen über einen Kontakt empfangen werden, feststellt, ob der Kontakt ein von dem Benutzer angegebener Kontakt von Interesse ist, und
wenn der Kontakt ein von dem Benutzer angegebener Kontakt von Interesse ist, Feststellen, ob die Anwesenheitsinformationen eine Veränderung des Anwesenheitsstatus dahingehend anzeigen, dass der Kontakt nunmehr zum Kommunizieren mit dem Benutzer verfügbar ist, und, wenn der Kontakt und die Veränderung des Anwesenheitsstatus von Interesse für den Benutzer sind, Benachrichtigen des Benutzers, wobei die Benachrichtigung Verfahren der Kommunikation mit dem Kontakt anzeigt, und
wenn der Kontakt oder die Veränderung des Anwesenheitsstatus nicht von Interesse ist, Unterlassen der Benachrichtigung des Benutzers;
eine Einrichtung, mit der durch den Benutzer ein Verfahren zum Benachrichtigen des Benutzers über die Veränderung des Anwesenheitsstatus des Kontaktes von Interesse ausgewählt wird, wobei das System zum Benachrichtigen so eingerichtet ist, dass es das Verfahren auf Basis eines aktuellen Anwesenheitsstatus des Benutzers verwendet.

15. System nach Anspruch 14, wobei ein Verfahren der Kommunikation eine Sofortmitteilung (instant message) ist.

16. System nach Anspruch 14, wobei ein Verfahren der Kommunikation ein Telefonanruf ist.

17. System nach Anspruch 14, das eine Einrichtung umfasst, die es einem Kontakt gestattet, Verfügbarkeit zu definieren.

18. System nach Anspruch 14, wobei Verfügbarkeit durch den Anwesenheitsstatus angezeigt wird.

## Revendications

1. Procédé électronique pour fournir des informations de présence de contacts, le procédé comprenant les étapes qui consistent :
à recevoir une indication à partir d'un utilisateur qui s'abonne à des informations de présence des contacts ;
à recevoir une indication à partir de l'utilisateur qui spécifie des contacts intéressants à partir desquels l'utilisateur veut recevoir une notification quand un contact entre dans un certain état de présence ;
à recevoir des informations de présence concernant un contact ;
à déterminer si le contact est un contact intéressant tel que l'a spécifié l'utilisateur ;
et, si oui, à déterminer si l'état de présence du contact intéressant indique un certain changement, et
si oui, à notifier à l'utilisateur le changement d'état de présence du contact intéressant ; et
si le contact ou le changement d'état de présence n'est pas intéressant, à supprimer la notification à l'utilisateur,
à recevoir une indication à partir de l'utilisateur qui sélectionne un procédé pour notifier à l'utilisateur le changement d'état de présence du contact intéressant qui doit être utilisé sur la base d'un état de présence actuelle de l'utilisateur.

2. Procédé de la revendication 1, selon lequel la notification comprend des procédés de communication avec le contact.

3. Procédé de la revendication 2, selon lequel un procédé de communication comprend un message instantané.

4. Procédé de la revendication 2, selon lequel un procédé de communication comprend un appel téléphonique.

5. Procédé de la revendication 1, comprenant le fait de permettre à l'utilisateur de définir le certain changement d'état de présence.

6. Procédé de la revendication 1, selon lequel le certain changement est constitué par un passage à disponible pour communiquer avec l'utilisateur.

7. Procédé de la revendication 1, appliqué sur un téléphone.

8. Procédé de la revendication 1, appliqué sur un système informatique.

9. Support lisible par ordinateur, contenant des instructions pour commander un système informatique pour fournir des informations de présence de contact, à l'aide d'un procédé comprenant les étapes qui consistent :
à recevoir une indication à partir d'un utilisateur qui spécifie les contacts intéressants pour lesquels l'utilisateur veut recevoir une notification quand un contact entre dans un certain état de présence ;
à recevoir une indication à partir de l'utilisateur abonné à des informations de présence de nombreux contacts ;
à recevoir un état de présence d'un contact ;
à déterminer si le contact est un contact intéressant tel que l'a spécifié l'utilisateur ;
à déterminer si l'état de présence reçu présente un intérêt spécifié par l'utilisateur ; et
quand il est déterminé que le contact est intéressant et que l'état de présence présente un intérêt spécifié par l'utilisateur, à notifier à l'utilisateur l'état de présence reçu ; et
quand il est déterminé que le contact ou le changement d'état de présence n'est pas intéressant, à ne pas adresser de notification à l'utilisateur ;
à recevoir une indication à partir de l'utilisateur qui sélectionne un procédé pour notifier à l'utilisateur l'état de présence reçu du contact intéressant, à utiliser sur la base d'un état de présence actuel de l'utilisateur.

10. Support lisible par ordinateur de la revendication 9, dans lequel la notification est fournie par un procédé de communication qui est disponible pour l'utilisateur.

11. Support lisible par ordinateur de la revendication 9, dans lequel un contact peut spécifier un état de présence dans lequel le contact est disponible pour communiquer.

12. Support lisible par ordinateur de la revendication 9, dans lequel la notification comprend des procédés de communication avec le contact.

13. Support lisible par ordinateur de la revendication 9, dans lequel la notification est fournie quand le contact devient disponible pour communiquer avec un utilisateur.

14. Système pour adresser une notification à un utilisateur quand un contact devient disponible pour communiquer, comprenant :
des moyens pour la spécification, par l'utilisateur, de contacts intéressants à partir desquels l'utilisateur veut recevoir une notification quand un contact devient disponible pour communiquer ;
des moyens pour s'abonner à des informations de présence de nombreux contacts ;
des moyens pour recevoir des informations de présence concernant un contact,
étant précisé que le système détermine, quand les informations de présence concernant un contact sont reçues, si le contact est un contact intéressant tel que l'a spécifié l'utilisateur, et
si le contact est un contact intéressant tel que l'a spécifié l'utilisateur, il détermine si les informations de présence indiquent un changement d'état de présence tel que le contact est maintenant disponible pour communiquer avec l'utilisateur, et si le contact et le changement d'état de présence sont intéressants pour l'utilisateur, il adresse une notification à l'utilisateur, cette notification indiquant des procédés de communication avec le contact, et
si le contact ou le changement d'état de présence n'est pas intéressant, aucune notification n'est adressée à l'utilisateur ;
des moyens pour la sélection, par l'utilisateur, d'un procédé pour notifier à l'utilisateur le changement d'état de présence du contact intéressant, lequel procédé est apte à utiliser le système de notification sur la base d'un état de présence actuel de l'utilisateur.

15. Système de la revendication 14, dans lequel un procédé de communication est constitué par un message instantané.

16. Système de la revendication 14, dans lequel un procédé de communication est constitué par un appel téléphonique.

17. Système de la revendication 14, comprenant des moyens pour permettre à un contact de définir la disponibilité.

18. Système de la revendication 14, dans lequel la disponibilité est indiquée par l'état de présence.
